(19) Europäisches Patentamt
European Patent Office
Office européen des brevets

(11) **EP 3 572 386 A1**

(12) **EUROPEAN PATENT APPLICATION**
published in accordance with Art. 153(4) EPC

(43) Date of publication:
   27.11.2019  Bulletin 2019/48

(51) Int Cl.:
   *C03C 27/12* *(2006.01)*    *B60S 1/02* *(2006.01)*
   *H05B 3/10* *(2006.01)*    *H05B 3/20* *(2006.01)*
   *H05B 3/86* *(2006.01)*

(21) Application number: 18741060.0

(22) Date of filing: 19.01.2018

(86) International application number:
   **PCT/JP2018/001615**

(87) International publication number:
   **WO 2018/135625 (26.07.2018 Gazette 2018/30)**

(84) Designated Contracting States:
   **AL AT BE BG CH CY CZ DE DK EE ES FI FR GB
   GR HR HU IE IS IT LI LT LU LV MC MK MT NL NO
   PL PT RO RS SE SI SK SM TR**
   Designated Extension States:
   **BA ME**
   Designated Validation States:
   **MA MD TN**

(30) Priority: **19.01.2017  JP 2017007774**

(71) Applicant: **Nippon Sheet Glass Company, Limited**
   **Tokyo 108-6321 (JP)**

(72) Inventors:
   • **CHIBA, Kazuki**
    **Tokyo 108-6321 (JP)**
   • **OGAWA, Ryohei**
    **Tokyo 108-6321 (JP)**
   • **OGAWA, Hisashi**
    **Tokyo 108-6321 (JP)**

(74) Representative: **Mewburn Ellis LLP**
   **City Tower**
   **40 Basinghall Street**
   **London EC2V 5DE (GB)**

(54)  **LAMINATED GLASS**

(57)    Laminated glass includes: a first glass plate having a rectangular shape, and including a first side and a second side opposing the first side; a second glass plate arranged opposing the first glass plate, and having substantially the same shape as the shape of the first glass plate; and an intermediate film arranged between the first glass plate and the second glass plate, the intermediate film including: a first bus bar extending along an end portion closer to the first side; a second bus bar extending along an end portion closer to the second side; and a plurality of heating lines arranged parallel to each other so as to connect the first bus bar and the second bus bar to each other, wherein at least one of a length of the plurality of heating lines, a width of the plurality of heating lines, and a space between the plurality of heating lines is adjusted such that a plurality of regions with different amounts of heat generated are formed between the first bus bar and the second bus bar.

Fig. 1

EP 3 572 386 A1

**Description**

Technical Field

The present invention relates to laminated glass.

Background Art

A windshield of an automobile may fog on a cold day or in a cold climate area, and this fogging may cause trouble when driving. To address this, a variety of methods of defogging the windshield have been proposed. For example, Patent Document 1 discloses bus bars and heating lines arranged inside a windshield to defog the windshield using heat generated by the heating lines.

Citation List

Patent Literature

Patent Literature 1: JP 2000-77173A

Summary of Invention

Technical Problem

The amount of heat generated is substantially uniform over the entire windshield described in Patent Document 1, but the distribution of the amount of heat generated cannot be adjusted. For example, the amount of heat generated needs to be increased in front of a driver since the driver's visibility needs to be secured, but such an adjustment cannot be performed. Moreover, the distance between upper and lower bus bars near left and right end portions of the windshield is shorter than that at the center portion as shown in FIG. 1 of Patent Document 1, and thus, the resistance in the heating lines is smaller and the amount of heat generated per unit area is larger at the end portions. This causes a problem in that the left and right end portions are preferentially heated over the center portion, which affects the driver's field of view.
The present invention has been made to solve the foregoing problem, and aims to provide laminated glass with which the distribution of the amount of heat generated can be designed freely.

Solution to Problem

Laminated glass according to the present invention includes: a first glass plate having a rectangular shape, and including a first side and a second side opposing the first side; a second glass plate arranged opposing the first glass plate, and having substantially the same shape as the shape of the first glass plate; and an intermediate film arranged between the first glass plate and the second glass plate, the intermediate film including: a first bus bar extending along an end portion closer to the first side; a second bus bar extending along an end portion closer to the second side; and a plurality of heating lines arranged parallel to each other so as to connect the first bus bar and the second bus bar to each other, wherein at least one of a length of the plurality of heating lines, a width of the plurality of heating lines, and a space between the plurality of heating lines is adjusted such that a plurality of regions with different amounts of heat generated are formed between the first bus bar and the second bus bar.
In the above-described laminated glass, the laminated glass may constitute a windshield for a vehicle, and an amount of heat generated in a region opposing a driver may be greater than an amount of heat generated in another region.
In the above-described laminated glass, at least one of the heating lines may be formed by combining a plurality of portions with different widths in a longitudinal direction.
In the above-described laminated glass, at least one of the heating lines may be provided with at least one curved line portion having a curved line.
In the above-described laminated glass, the curved line portion may be provided with a wave-shaped curved line.
In the above-described laminated glass, the curved line portion may be formed into a sine wave shape, at least a portion of at least a pair of adjacent ones of the heating lines may be constituted by the curved line portion, and, in the adjacent curved line portions, a distance between center lines of waves that constitute the curved line portions may be twice an amplitude of the curved line portions or more.
In the above-described laminated glass, at least one of the heating lines may be provided with a plurality of the curved line portions, and the curved line portions may have different lengths.
In the above-described laminated glass, at least some of the plurality of heating lines may be formed such that a space therebetween differs.

In the above-described laminated glass, at least some of the plurality of heating lines may be formed so as to have different widths.

In the above-described laminated glass, at least some of the plurality of heating lines may be formed so as to have different lengths.

Advantageous Effects of Invention

With the laminated glass according to the present invention, the distribution of the amount of heat generated can be designed freely.

Brief Description of Drawings

FIG. 1 is a front elevational view of a first embodiment of laminated glass according to the present invention.
FIG. 2 is a cross-sectional view taken along a line A-A in FIG. 1.
FIG. 3 shows an example of a heating line.
FIG. 4 shows a distribution of the amount of heat generated from the heating lines.
FIG. 5 is a model diagram for performing a simulation of the distribution of the amount of heat generated.
FIG. 6 shows an example of a heating line.
FIG. 7 shows an example of a heating line.
FIG. 8 shows examples of sine waves.
FIG. 9 is a model diagram for performing a simulation of the distribution of the amount of heat generated.
FIG. 10 shows an example of adjacent heating lines.
FIG. 11 shows a distribution of the amount of heat generated from the heating lines.
FIG. 12 is a front elevational view showing test regions A and B that are defined by JIS R3212 in a glass plate.
FIG. 13 shows a distribution of the amount of heat generated from the heating lines.
FIG. 14 is a side view of a furnace through which a molding tool passes.
FIG. 15 is a plan view of the molding tool.
FIG. 16 is a cross-sectional view showing another example of an intermediate film.
FIG. 17 is a cross-sectional view showing another example of laminated glass according to the present invention.

Description of Embodiments

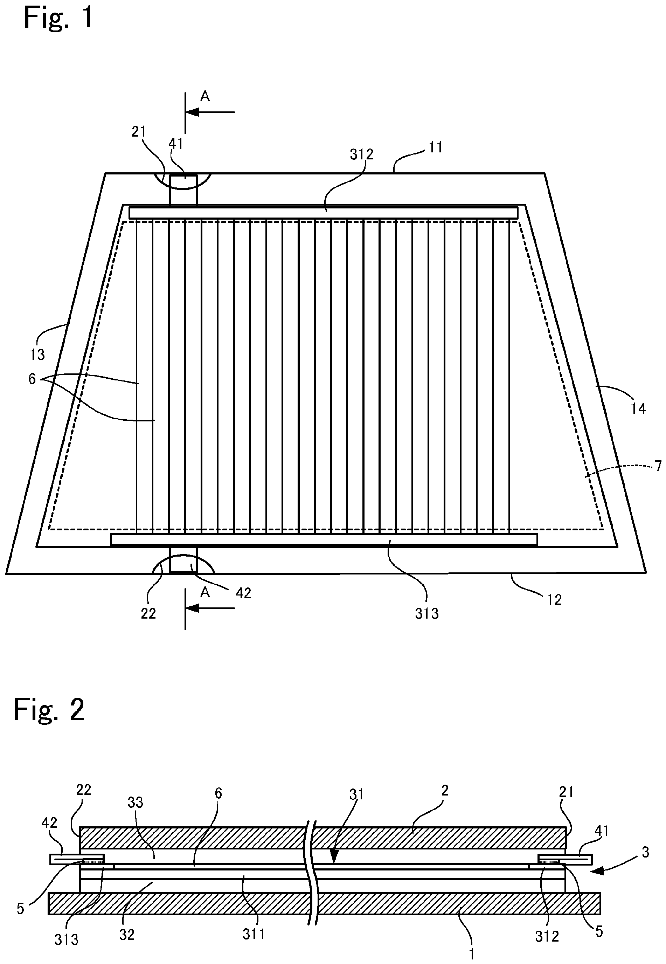

Hereinafter, a description will be given, with reference to the drawings, of an embodiment in which laminated glass according to the present invention is applied to a windshield. FIG. 1 is a plan view of a windshield according to this embodiment, and FIG. 2 is a cross-sectional view of FIG. 1. As shown in FIGS. 1 and 2, the windshield according to this embodiment includes an outer glass plate (second glass plate) 1, an inner glass plate (first glass plate) 2, and an intermediate film 3, which is arranged between these glass plates 1 and 2. Cutout portions 21 and 22 are formed in an upper end portion and a lower end portion, respectively, of the inner glass plate 2. Connecting members 41 and 42, which extend from the intermediate film 3, are exposed from the cutout portions 21 and 22, respectively. Each member will be described below.

1. Summary of Laminated Glass

1-1. Glass Plate

Both glass plates 1 and 2 are formed into a rectangular shape whose lower side 12 is longer than an upper side 11 thereof, and arc-shaped cutout portions are formed in the upper end portion and the lower end portion of the inner glass plate 2, as mentioned above. In the following description, the cutout portion formed in the upper end portion of the inner glass plate 2 will be referred to as a first cutout portion 21, and the cutout portion formed in the lower end portion will be referred to as a second cutout portion 22. The glass plates 11 and 12 can be known glass plates, and can also be formed with heat absorbing glass, ordinary clear glass or green glass, or UV green glass. However, these glass plates 11 and 12 need to achieve visible light transmittance conforming to the safety standards in the country in which an automobile is used. For example, an adjustment can be made so that a required solar absorptivity is ensured in the outer glass plate 11, and the visible light transmittance satisfies the safety standards with the inner glass plate 12. Examples of compositions of clear glass, heat absorbing glass, and soda-lime glass are listed below.

Clear Glass

SiO$_2$: 70 to 73 mass%
Al$_2$O$_3$:0.6 to 2.4 mass%
CaO: 7 to 12 mass%
MgO: 1.0 to 4.5 mass%
R$_2$O: 13 to 15 mass% (R denotes alkali metal)
Total iron oxide (T-Fe$_2$O$_3$) expressed in terms of Fe$_2$O$_3$: 0.08 to 0.14 mass%

Heat Absorbing Glass

The composition of heat absorbing glass can be, for example, a composition that is based on the composition of clear glass, where the proportion of total iron oxide (T-Fe$_2$O$_3$) expressed in terms of Fe$_2$O$_3$ is 0.4 to 1.3 mass%, the proportion of CeO$_2$ is 0 to 2 mass%, the proportion of TiO$_2$ is 0 to 0.5 mass%, and the skeletal component (primarily, SiO$_2$ and Al$_2$O$_3$) of glass is reduced by the increased amount of T-Fe$_2$O$_3$, CeO$_2$, and TiO$_2$.

Soda-lime Glass

SiO$_2$: 65 to 80 mass%
Al$_2$O$_3$: 0 to 5 mass%
CaO: 5 to 15 mass%
MgO: 2 mass% or more
NaO: 10 to 18 mass%
K$_2$O: 0 to 5 mass%
MgO+CaO: 5 to 15 mass%
Na$_2$O+K$_2$O: 10 to 20 mass%
SO$_3$: 0.05 to 0.3 mass%
B$_2$O$_3$: 0 to 5 mass%
Total iron oxide (T-Fe$_2$O$_3$) expressed in terms of Fe$_2$O$_3$: 0.02 to 0.03 mass%

As described above, the glass plates 1 and 2 are formed into a rectangular shape, and the length ratio between the upper side 11 and the lower side 12 can be, for example, 1:1.04 to 1:1.5. For example, if the length of the upper side is 1200 mm, the length of the lower side can be 1250 to 1800 mm. Specifically, the length of the upper side can be 1195 mm, and the length of the lower side can be 1435 mm. Note that the aforementioned ratio is a ratio in a two-dimensional plane when the windshield is projected from the front side.

That is to say, although FIG. 1 illustrates an example in which the lower side 12 is longer, the present invention can also be applied to a windshield whose upper side 11 is longer. For example, in the case of a windshield for a compact car for one person's use, if the length of the upper side is 500 mm, the length of the lower side can be 350 to 450 mm. Specifically, the length of the upper side may be 500 mm, and the length of the lower side may be 425 mm.

The thickness of the laminated glass according to this embodiment is not particularly limited. However, from the viewpoint of weight reduction, the total thickness of the outer glass plate 1 and the inner glass plate 2 is preferably 2.4 to 4.6 mm, more preferably 2.6 to 3.4 mm, and particularly preferably 2.7 to 3.2 mm. Since the total thickness of the outer glass plate 1 and the inner glass plate 2 thus needs to be reduced for weight reduction, the respective thicknesses of the outer glass plate 11 and the inner glass plate 12, which are not particularly limited, can be determined as follows, for example.

The outer glass plate 1 principally needs durability and shock resistance against an external obstacle. For example, in the case of using this laminated glass as an automobile windshield, shock resistance against a flying object, such as a small stone, is needed. Meanwhile, the larger the thickness is, the larger the weight is, which is not favorable. From this viewpoint, the thickness of the outer glass plate 1 preferably is 1.0 to 3.0 mm, and more preferably is 1.6 to 2.3 mm. The thickness to be employed can be determined in accordance with the usage of the glass.

The thickness of the inner glass plate 2 can be made equal to that of the outer glass plate 1, but can alternatively be made smaller than the thickness of the outer glass plate 11 for the reduction in the weight of the laminated glass, for example. Specifically, giving consideration to the glass strength, the thickness of the inner glass plate 2 is preferably 0.6 to 2.0 mm, more preferably 0.8 to 1.8 mm, and particularly preferably 0.8 to 1.6 mm. Furthermore, the thickness of the inner glass plate 2 is preferably 0.8 to 1.3 mm. The thickness of the inner glass plate 2 to be employed can also be determined in accordance with the usage of glass.

The shape of the outer glass plate 1 and the inner glass plate 2 according to this embodiment may also be a curved shape. However, if the glass plates 1 and 2 have a curved shape, it is considered that the larger the cross-curvature is, the lower the sound insulating property is. The cross-curvature refers to the amount indicating the curvature of a glass plate. When a line L that connects the center of an upper side of a glass plate to the center of a lower side is set, the largest distance between the line L and the glass plate is defined as a cross-curvature D.

There is no significant difference in sound transmission loss (STL) between the curved glass plates in the range of the cross-curvature from 30 to 38 mm, but the sound transmission loss of the curved glass plates is lower than that of the flat glass plate in a frequency band of 4000 Hz and smaller. Accordingly, in the case of producing a curved glass plate, a glass plate with a smaller cross-curvature is favorable. Specifically, the cross-curvature is preferably less than 30 mm, more preferably smaller than 25 mm, and particularly preferably smaller than 20 mm.

A description will now be given of an example of a method of measuring the thickness in the case where a glass plate is curved. First, measurement is performed at two positions, namely an upper position and a lower position on the center line that extends in the up-down direction, passing through the center of the glass plate in the left-right direction. There is no particular restriction on the type of measurement instrument, but a thickness gauge, such as the SM-112 manufactured by Teclock Corporation for example, can be used. During measurement, the glass plate is arranged so that the curved face thereof is placed on a flat face, and measurement is performed while holding an end portion of the glass plate using the aforementioned thickness gauge.

1-2. Intermediate Film

Next, the intermediate film 3 will be described. The intermediate film 3 is constituted by three layers, which are a heat-generating layer 31, and a pair of adhesion layers 32 and 33 that sandwich the heat-generating layer 31. In the following description, the adhesion layer arranged on the outer glass plate 1 side will be referred to as a first adhesion layer 32, and the adhesion layer arranged on the inner glass plate 2 side will be referred to as a second adhesion layer 33.

1-2-1. Heat-generating Layer

First, the heat-generating layer 31 will be described. The heat-generating layer 31 includes a sheet-shaped base 311, as well as a first bus bar 312, a second bus bar 313, and a plurality of heating lines 6, which are arranged on the base 311. The base 311 can be formed into a rectangular shape so as to correspond to the shape of the glass plates 1 and 2, but does not necessarily have to have the same shape as the shape of the glass plates 1 and 2, and may also be smaller than the glass plates 1 and 2. For example, as shown in FIG. 1, the length of the base 311 in the up-down direction may be shorter than the length between the cutout portions 21 and 22 of the inner glass plate 2 so that the base 311 does not interfere with the cutout portions 21 and 22. Also, the length of the base 311 in the left-right direction may also be shorter than the width of the glass plates 1 and 2.

The first bus bar 312 is formed to extend along an upper side of the base 311. Meanwhile, the second bus bar 313 is formed to extend along a lower side of the base 311, and is formed longer than the first bus bar 312. However, the bus bars 312 and 313 are arranged inward of the aforementioned cutout portions 21 and 22, respectively, so as not to be exposed from the cutout portions 21 and 22 when the intermediate film 3 is sandwiched between the glass plates 1 and 2. Note that the widths of the bus bars 312 and 313 in the up-down direction are preferably 5 to 50 mm, and more preferably 10 to 30 mm, for example. This is because, if the width of the bus bars 312 and 313 is smaller than 5 mm, there is concern that a "heat spot" phenomenon will occur and more heat will be generated therefrom than from the heating lines, and, on the contrary, if the width of the bus bars 312 and 313 is larger than 50 mm, there is a concern that the field of view will be interrupted by the bus bars 312 and 313. The bus bars 312 and 313 do not have to be formed accurately along the base 311. That is to say, the bus bars 312 and 313 do not have to be completely parallel to end edges of the base 311, and can also be curved, for example.

The plurality of heating lines 6 are arranged parallel to each other so as to connect the bus bars 312 and 313. In this embodiment, the heating lines 6 are configured to have a plurality of regions with different amounts of heat generated, between the bus bars 312 and 313. For example, (1) regions with different amounts of heat generated are arranged in the up-down direction, (2) regions with different amounts of heat generated are arranged in the left-right direction, or (3) the regions (1) and the regions (2) are mixed. A configuration of the heating lines 6 for forming these regions (1) to (3) will be described below.

(1) Regions with different amounts of heat generated are arranged in up-down direction

To form those regions, each of the heating lines 6 is formed to have portions with amounts of heat generated that are different in the up-down direction.

Specifically, (a) each heating line is formed by combining a plurality of portions with different widths (or cross-sectional areas), and/or (b) each heating line is formed to be curved at least partially. Note that the cross-sectional area of the heating lines 6 affects the amount of heat generated in practice. However, to change the cross-sectional area, it is easier to change the width of the heating lines 6 than to change the thickness thereof, and thus, there are cases where the width is changed while hardly changing the thickness (particularly in the case of etching). Accordingly, since the width and the cross-sectional area technically have substantially the same meaning, these terms may be used without distinction below.

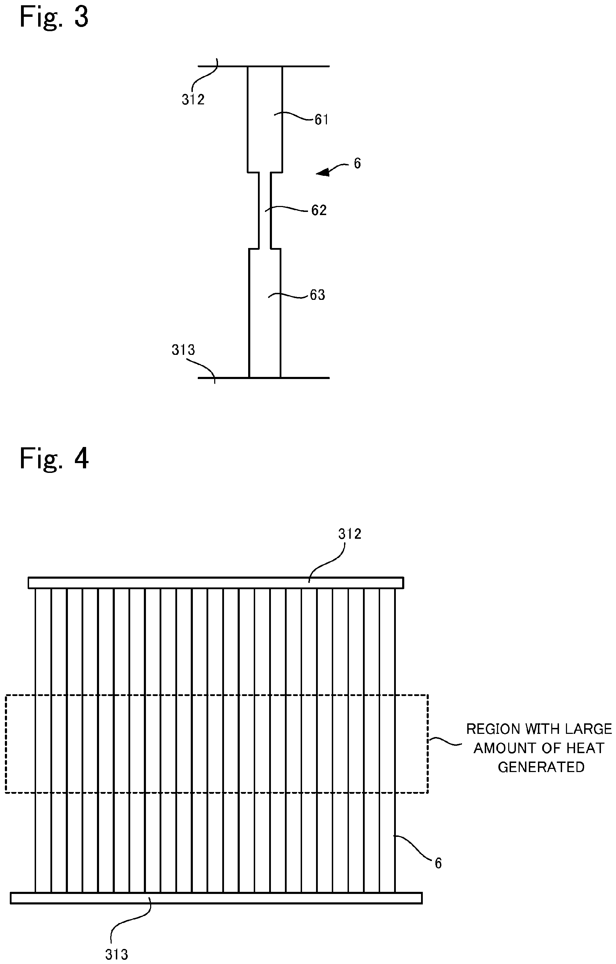

First, the mode (a) will be described. As shown in FIG. 3, in this example, each of the heating lines 6 is formed by combining three portions arranged in the up-down direction, namely a first portion 61, a second portion 62, and a third portion 63, which are arranged in this order downward from above. Of these portions, the first portion 61 and the third portion 63 have the same width, whereas the second portion 62 has a smaller width. In one heating line, the current is constant, and thus, the resistance is greater and the amount of heat generated is greater in a portion with a smaller cross-sectional area (width) according to Expression (1) below.

$$W=IE=I^2R=I^2\rho(L/A) \quad ... \quad (1)$$

Here, W: electric power, E: voltage, I: current, R: resistance, L: length, A: cross-sectional area, and p: electric resistivity

Accordingly, the amount of heat generated in the second portion 62 is greater than the amount of heat generated in the first and third portions 61 and 63. As shown in FIG. 4, if such heating lines 6 are arranged parallel to each other in the left-right direction between the bus bars 312 and 313, the amount of heat generated can be increased only in the region where the second portions 62 are arranged, i.e. an intermediate region of the laminated glass in the up-down direction.

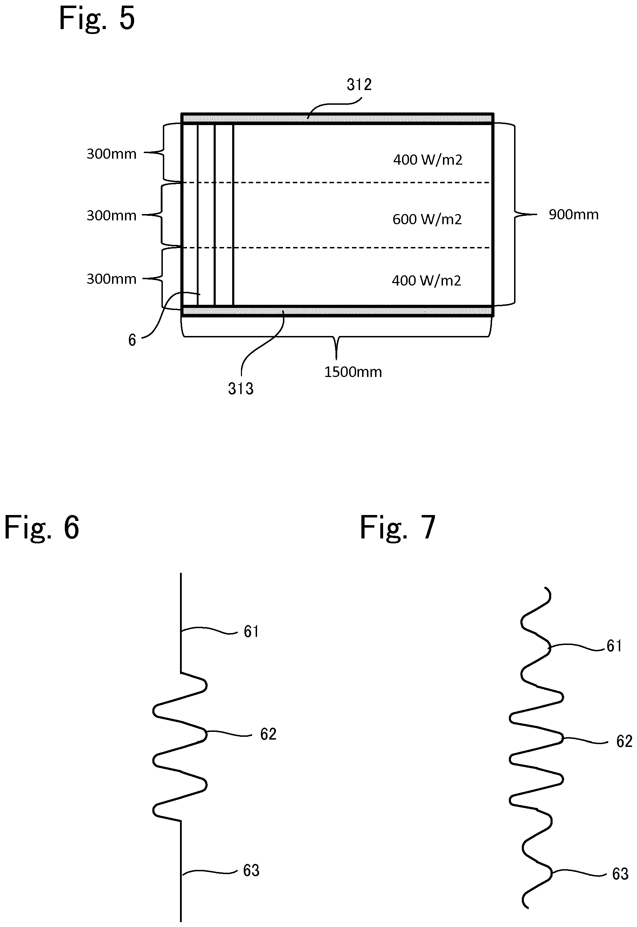

Specifically, the following calculation is possible. For example, a model of a glass plate with a heating region that is 0.9 m long and 1.5 m wide as shown in FIG. 5, is assumed. In this model, 458 heating lines are arranged parallel to each other in the left-right direction with spaces of $3.27\times10^{-3}$ m therebetween. The cross-sectional area of each of the heating lines 6 is $1.7\times10^{-10}$ m$^2$ in the first portion and the third portion, and is $1.1\times10^{-10}$ m$^2$ in the second portion. For example, if the thickness of each heating line 6 is 12 μm, the width thereof is 14 μm in the first portion 61, and is 9 μm in the second portion 62. It is also assumed that the length of each of these portions in the up-down direction is 0.3 m, and the conductivity of the heating lines 6 is $1.8\times10^{-8}$ Ω·m. If a voltage of 13.5 V is applied between the two bus bars under those conditions, the following calculated value is obtained.

[Table 1]

|  | Entirety | First Portion | Second Portion | Third Portion |
|---|---|---|---|---|
| Resistance (Ω) | 0.29 | 0.08 | 0.12 | 0.08 |
| Current (A) | 46.7 | 46.7 | 46.7 | 46.7 |
| Voltage (V) | 13.5 | 3.9 | 5.8 | 3.9 |
| Electric Power (W) | 630 | 180 | 270 | 180 |
| Amount of Heat Generated (W/m$^2$) | 467 | 400 | 600 | 400 |

Accordingly, the amount of heat generated in the center region of the laminated glass in the up-down direction can be made 1.5 times greater than that in the upper region and the lower region.

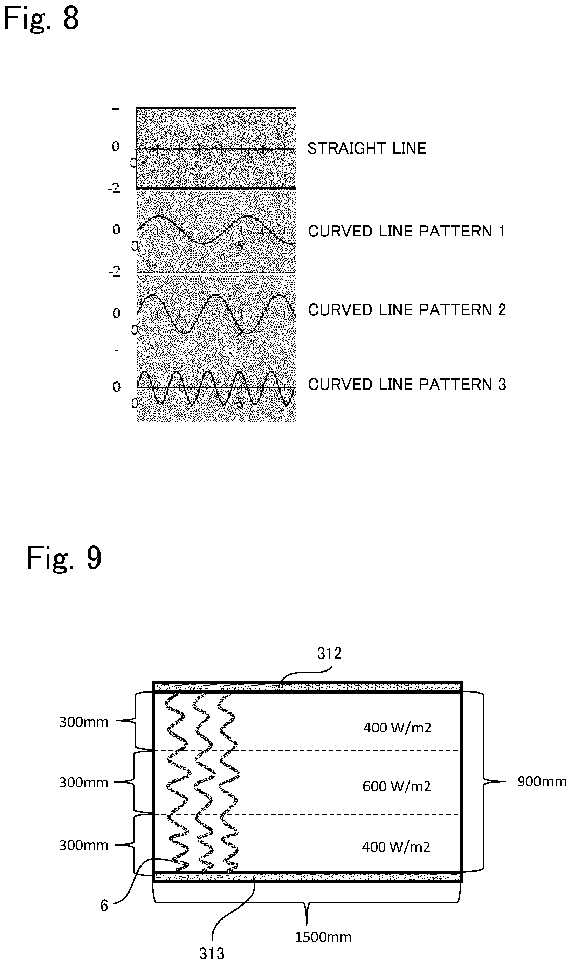

Next, the aforementioned mode (b) will be described. In this example, one heating line 6 is formed with a plurality of portions with different lengths. That is to say, one heating line 6 is formed by combining straight lines and curved lines. For example, as shown in FIG. 6, the first portion 61 and the third portion 63 are formed into straight lines, and the second portion 62 is formed into a curved line. Alternatively, as shown in FIG. 7, all of the portions 61 to 63 can be formed into curved lines. In the case of forming the portions 61 to 63 into curved lines, these portions can be formed into a wave shape (sine wave shape), for example. In this case, the length of curved line portions can be varied by varying the period and the amplitude of the sine wave, as shown in Table 2 below and FIG. 8. The length in Table 2 refers to the length when the straight line is 100%. Note that a portion where a curved line is formed corresponds to a curved line portion of the invention.

[Table 2]

|  | Straight line | Curved Line Pattern 1 | Curved Line Pattern 2 | Curved Line Pattern 3 |
|---|---|---|---|---|
| Length | 100% | 120% | 180% | 120% |
| Period (mm) | - | 4.20 | 2.50 | 4.20 |
| Amplitude (mm) | - | 0.65 | 0.89 | 0.65 |

According to Table 2 and FIG. 8, in the curved line pattern 1, the length can be made 20% greater than that of a straight line, for example, by changing the period and the amplitude of a sine wave. Accordingly, by combining such sine waves with different periods and amplitudes to configure the heating lines 6, the amount of heat generated in the regions arranged in the up-down direction can be differentiated in the laminated glass, as shown in FIG. 4.

Specifically, the following calculation is possible. For example, a model of a glass plate with a heating region that is 0.9 m long and 1.5 m wide as shown in FIG. 9, is assumed. In this model, 573 heating lines 6 are arranged parallel to each other in the left-right direction with spaces of $2.62\times10^{-3}$ m therebetween. The cross-sectional area of each heating line 6 is $1.4\times10^{-10}$ m$^2$. For example, if the thickness of each heating line 6 is 12 $\mu$m, the width thereof is 12 $\mu$m. It is also assumed that the length of each portion in the up-down direction is 0.3 m, and the conductivity of each heating line 6 is $1.8\times10^{-8}$ $\Omega\cdot$m. The aforementioned curved line patterns 1 and 3 are used in the first and third portions, and the aforementioned curved line pattern 2 is used in the second portion. If a voltage of 13.5 V is applied between the two bus bars 312 and 313 under those conditions, the following calculated value is obtained.

[Table 3]

|  | Entirety | First Portion | Second Portion | Third Portion |
|---|---|---|---|---|
| Length (m) | 1.26 | 0.36 | 0.54 | 0.36 |
| Resistance ($\Omega$) | 0.29 | 0.08 | 0.12 | 0.08 |
| Current (A) | 46.7 | 46.7 | 46.7 | 46.7 |
| Voltage (V) | 13.5 | 3.9 | 5.8 | 3.9 |
| Electric Power (W) | 630 | 180 | 270 | 180 |
| Amount of Heat Generated (W/m$^2$) | 467 | 400 | 600 | 400 |

Accordingly, the amount of heat generated in the center region of the laminated glass in the up-down direction can be made 1.5 times greater than that in the upper region and the lower region.

Note that each heating line 6 can also be formed by combining the above modes (a) and (b). Although three regions are formed in the up-down directions in the above example, two, or four or more regions may alternatively be formed.

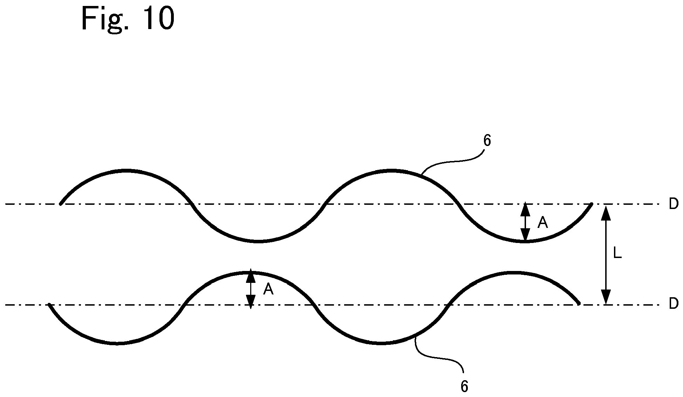

If the heating lines 6 each being formed into a sine wave shape are arranged adjacent to each other, there is a possibility that the heating lines 6 overlap each other, and there is concern that the heating line 6 will be more likely to be visually recognized. To prevent this, it is preferable to form the heating lines 6 as follows. That is to say, as shown in FIG 10, the distance L between the center lines D of waves of adjacent heating lines 6 (an example of a space between heating lines according to the invention) may be made twice the amplitude A of each heating line 6 or more.

(2) Regions with different amounts of heat generated are arranged in left-right direction

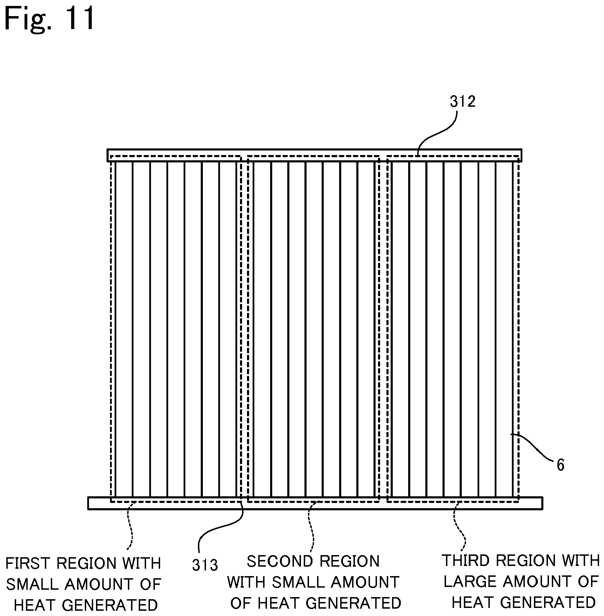

To form such regions, the configuration of the heating lines 6 is changed between the regions arranged in the left-right direction. For example, three regions arranged from left to right, namely first, second, and third regions are formed in the laminated glass, as shown in FIG. 11. For example, if the amount of heat generated in the first and second regions is reduced, and the amount of heat generated in the third region is increased, the heating lines 6 can be configured as follows.

That is to say, (a) the space between the heating lines 6, (b) the width of each heating line 6, and (c) the length of each heating line 6 are changed between the regions. In the mode (a), the amount of heat generated increases if the space between the heating lines 6 is reduced, whereas the amount of heat generated decreases if the space is increased. Accordingly, the space between the heating lines 6 is increased in the first and second regions, and the space between the heating lines 6 is reduced in the third region.

The modes (b) and (c) can be considered as follows. That is to say, the voltage applied to each of the heating lines 6 that are connected in parallel is equal as indicated by Expression (2) below, and thus, the amount of heat generated increases if the cross-sectional area (width) increases, and the amount of heat generated decreases if the length increases.

$$W=IE=E^{2}/R=E^{2}(A/\rho L) \quad \cdots \quad (2)$$

Here, W: electric power, E: voltage, I: current, R: resistance, L: length, A: cross-sectional area, and p: electric resistivity

Accordingly, the width of each heating line 6 is reduced in the first and second regions, and the width of each heating line 6 is increased in the third region. Alternatively, the length of each heating line 6 is increased in the first and second regions, and the length of each heating line 6 is reduced in the third region. To change the length of the heating lines 6, straight lines and curved lines are combined to form the heating lines 6 as mentioned above. The modes (a) to (c) can also be combined as appropriate. Lines other than curved lines that have a corner portion can also be combined. If regions with different amounts of heat generated are arranged in the left-right direction as described above, for example, a windshield can be configured such that the amount of heat generated in a region opposing a driver is greater than the amount of heat generated in the other regions. Thus, the field of view from the driver seat can be secured reliably with other defogging.

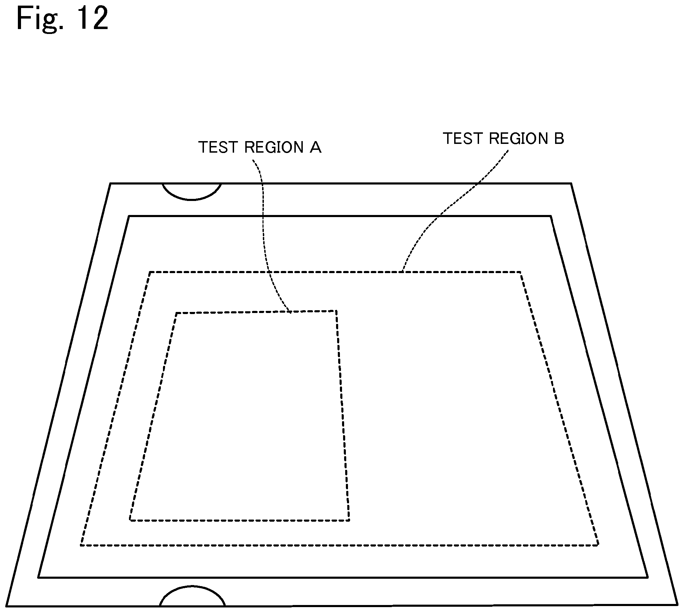

Here, the region opposing a driver may be a region defined by JIS R3212, for example. More specifically, JIS R3212 defines regions (test region A and test region B) for testing predetermined optical properties, i.e. double image, perspective distortion, and color identification. These test regions A and B are substantially as shown in FIG. 12. Here, the test region A in FIG. 12 is the region in the case of a right-hand drive vehicle. Also, the region opposing a driver may at least be the test region B, or may more preferably be the test region A. Alternatively, the region opposing a driver may be a region between 0.2 m from the upper side of a windshield and 0.2 m from the lower side thereof.

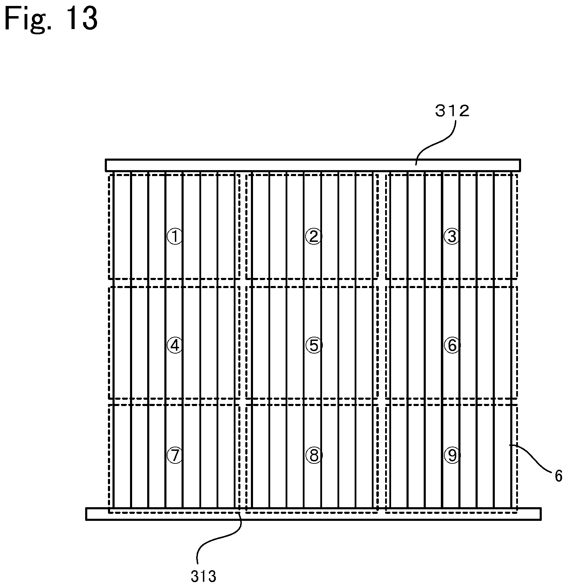

Note that, by combining the above-described modes (1) and (2), for example, nine regions arranged in the up-down direction and the left-right direction can be formed as shown in FIG. 13, and the amount of heat generated can be differentiated between these regions.

The line width of each of the above-described heating lines 6 is preferably 3 to 500 $\mu$m, more preferably 5 to 20 $\mu$m, and particularly preferably 8 to 15 $\mu$m. The smaller the width is, the more difficult it is to visually recognize the heating lines 6, and thus, the heating lines 6 with a smaller width are suitable for the windshield according to this embodiment. The space between adjacent heating lines 6 is preferably 1 to 4 mm, more preferably 1.25 to 3 mm, and particularly preferably 1.25 to 2.5 mm. The width of each heating line 6 can be measured using a microscope, such as VHX-200 manufactured by Keyence Corporation, at a magnification ratio of 1000, for example.

Next, the material of the heat-generating layer 31 will be described. The base 311 is a transparent film that supports the bus bars 312 and 313 and the heating lines 6. Although the material of the base 311 is not particularly limited, the base 311 can be formed with polyethylene terephthalate, polyethylene, polymethyl metacrylate, polyvinyl chloride, polyester, polyolefin, polycarbonate, polystyrene, polypropylene, nylon, or the like, for example. The bus bars 312 and 313 and the heating lines 6 can be formed with the same material, and can be formed with any of a variety of materials such as copper (or tinned copper), tungsten, and silver.

Next, a method of forming the bus bars 312 and 313 and the heating lines 6 will be described. The bus bars 312 and 313 and the heating lines 6 can be formed by arranging fine lines (such as wires) that are formed in advance, or the like, on the base 311. In particular, to further thin the line width of the heating lines 6, the heating lines 6 can be formed by patterning them on the base 311. The method thereof is not particularly limited, but various methods such as printing, etching, and transferring can be used in this patterning. At this time, the bus bars 312 and 313 and the heating lines 6 can be formed separately, or can also be formed integrally. Note that "integrally formed" means that the bus bars 312 and 313 and the heating lines 6 are formed seamlessly in the material thereof, and no interface is present therebetween.

The bus bars 312 and 313 are formed on the base 311, and the base 311 in portions that correspond to the bus bars 312 and 313 are peeled off and removed, while leaving the base 311 for the heating lines 6. Thereafter, the heating lines can also be arranged on the base between the bus bars 312 and 313.

In particular, in the case of employing etching, the following process can be applied as an example. First, metal foil is attached to the base 311 via a primer layer by means of dry lamination. Copper can be used as the metal foil, for example. Then, a chemical etching process using photolithography is performed on the metal foil, and thus, the bus bars 312 and 313 and the plurality of heating lines 6 can be integrally patterned on the base 311. The thickness of the metal foil may be 1 $\mu$m to 100 $\mu$m. The thinner the metal foil, the further the time taken for chemical etching can be shortened, and thus, the thickness of the metal foil is preferably 1 $\mu$m to 50 $\mu$m, and more preferably 1 $\mu$m to 15 $\mu$m. In particular, in the case of reducing the line width of the heating lines 6 (e.g. to 15$\mu$m or smaller), it is preferable to use thin metal foil. A process may be employed in which a thin metal layer (e.g. of 5$\mu$m or smaller) is formed on the base 311 by means of evaporation, spattering, or the like, and thereafter, patterning is carried out using photolithography.

1-2-2. Adhesion Layer

The adhesion layers 32 and 33 are sheet-shaped members for sandwiching the heat-generating layer 31 and adhering the heat-generating layer 31 to the glass plates 1 and 2. The adhesion layers 32 and 33 are formed to have the same size as the glass plates 1 and 2, and cutout portions that have the same shape as that of the cutout portions 21 and 22 of the inner glass plate 2 are formed at positions on the adhesion layers 32 and 33 corresponding to the cutout portions 21 and 22, respectively. The adhesion layers 32 and 33 can be formed with any of a variety of materials, and can be formed with, for example, polyvinyl butyral resin (PVB), ethylene vinyl acetate (EVA), or the like. In particular, polyvinyl butyral resin is favorable in terms of excellent adhesiveness to the glass plates and penetration resistance. Note that a surfactant layer can also be provided between each of the adhesion layers 32 and 33 and the heat-generating layer 31. This surfactant can improve the surfaces of both layers and increase adhesiveness.

### 1-2-3. Thickness of Intermediate Film

The total thickness of the intermediate film 3 is not particularly defined, but is preferably 0.3 to 6.0 mm, more preferably 0.5 to 4.0 mm, and particularly preferably 0.6 to 2.0 mm. The thickness of the base 311 of the heat-generating layer 31 is preferably 0.01 to 2.0 mm, and more preferably 0.03 to 0.6 mm. Meanwhile, it is preferable that the thickness of the adhesion layers 32 and 33 is preferably larger than the thickness of the heat-generating layer 31. Specifically, the thickness of the adhesion layers 32 and 33 is preferably 0.1 to 2.0 mm, and more preferably 0.1 to 1.0 mm. Note that, to closely adhere the second adhesion layer 33 to the base 311, it is preferable that the thickness of the bus bars 312 and 313 and the heating lines 6 that are sandwiched therebetween is 3 to 20 $\mu$m.

The thickness of the heat-generating layer 31 and the adhesion layers 32 and 33 can be measured as follows, for example. Initially, a cross-section of the laminated glass is displayed at a magnification ratio of 175 by a microscope (e.g. the VH-5500 manufactured by Keyence Corporation). Then, the thickness of the heat-generating layer 31 and the adhesion layers 32 and 33 is specified by a visual check, and the visually-specified thickness is measured. At this time, to eliminate variation due to the visual check, the measurement is performed five times, and the average value of measurement values obtained through this measurement are used as the thickness of the heat-generating layer 31 and the adhesion layers 32 and 33.

The thickness of the heat-generating layer 31 and the adhesion layers 32 and 33 of the intermediate film 3 does not need to be uniform over the entire surface. For example, these layers can be formed into a wedge shape for laminated glass to be used in a head-up display. In this case, the thickness of the heat-generating layer 31 and the adhesion layers 32 and 33 of the intermediate film 3 is measured at a portion with the smallest thickness, i.e. a lowermost side portion of the laminated glass. If the intermediate film 3 has a wedge shape, the outer glass plate 1 and the inner glass plate 2 are not arranged parallel to each other, but glass plates in such an arrangement is also included in the glass plate according to the present invention. That is to say, the present invention includes an arrangement of the outer glass plate 1 and the inner glass plate 2 in the case of using an intermediate film 3 that includes the heat-generating layer 31 and the adhesion layers 32 and 33 whose thickness increases at a rate of change of 3 mm per meter or less, for example.

### 1-3. Connecting Material

Next, the connecting materials will be described. The connecting members 41 and 42 are for connecting the bus bars 312 and 313, respectively, to connection terminals (anode terminal or cathode terminal: not shown in the diagram), and are formed into a sheet shape with a conductive material. A voltage of 12 V or more, e.g. a power supply voltage of 48 V, is applied to these connection terminals. In the following description, the connecting member connected to the first bus bar 312 will be referred to as a first connecting member 41, and the connecting member connected to the second bus bar 313 will be referred to as a second connecting member 42. Since the connecting members 41 and 42 have the same configuration, the following will mainly describe the first connecting member 41.

The first connecting member 41 is formed into a rectangular shape, and is sandwiched between the first bus bar 312 and the second adhesion layer 33. The first connecting member 41 is then fixed to the first bus bar 312 by a fixing material 5, such as solder. It is preferable that, for example, solder with a low melting point of 150°C or lower is used as the fixing material 5 so that the first connecting material 41 can be fixed by means of autoclave at the same time as later-described assembly of the windshield. The first connecting member 41 extends from the first bus bar 312 to an upper end edge of the outer glass plate 1, and is exposed from the first cutout portion 21 that is formed in the inner glass plate 2. A connection terminal, to which a cable extending to a power source is connected, is connected to this exposed portion via a fixing material such as solder. Thus, connection terminals are fixed to the portions of the connecting members 41 and 42 that are exposed from the cutout portions 21 and 22 of the inner glass plate 2, whereas the connecting members 41 and 42 do not protrude from end portions of the glass plates 1 and 2. Note that the connecting members 41 and 42 are made of a thin material, and can thus be folded and then fixed, at their end portions, to the bus bar 312 via the fixing material 5, as shown in FIG. 2.

### 1-4. Obstructing Layer

As shown in FIG. 1, an obstructing layer 7 that is made of ceramic, whose color is black or a dark color, is laminated at the periphery of this laminated glass. The obstructing layer 7 is for obstructing the field of view from inside and outside of a vehicle, and is laminated along the four sides of the laminated glass. The bus bars 312 and 313 are arranged at positions at which they are covered by the obstructing layer 7. Note that the reference numeral 7 in the drawing denotes the inner periphery of the obstructing layer 7.

The obstructing layer 7 may be provided in various manners, e.g. only on an inner face of the outer glass plate 11, only on an inner face of the inner glass plate 12, or on the inner face of the outer glass plate 11 and the inner face of the inner glass plate 12. The obstructing layer 7 may be made of ceramic or any of various materials, and may have the following composition, for example.

[Table 4]

1st table

| | | First and Second Colored Ceramic Paste |
|---|---|---|
| Pigment *1 | mass% | 20 |
| Resin (Cellulosic Resin) | mass% | 10 |
| Organic Solvent (Pine Oil) | mass% | 10 |
| Glass Binder *2 | mass% | 65 |
| Viscosity | dPs | 150 |
| *1, Main ingredients: copper oxide, chromium oxide, iron oxide, and manganese oxide *2, Main ingredients: bismuth borosilicate, zinc borosilicate | | |

The ceramic can be formed by means of screen printing, but can also be manufactured by transferring a transfer film for firing onto a glass plate and firing this glass plate. In the case of employing screen printing, for example, the following conditions may be employed: polyester screen: 355 mesh, coat thickness: 20 $\mu$m, tension: 20 Nm, squeegee hardness: 80 degrees, attachment angle: 75°, and printing speed: 300 mm/s, and the ceramic can be formed after being dried in a drying oven at 150°C for 10 minutes.

The obstructing layer 7 can also be formed not only by laminating a ceramic, but also by attaching an obstructing film that is made of a dark-color resin.

2. Method of Manufacturing Windshield

Next, a method of manufacturing the windshield will be described. First, a manufacturing line for the glass plates will be described.

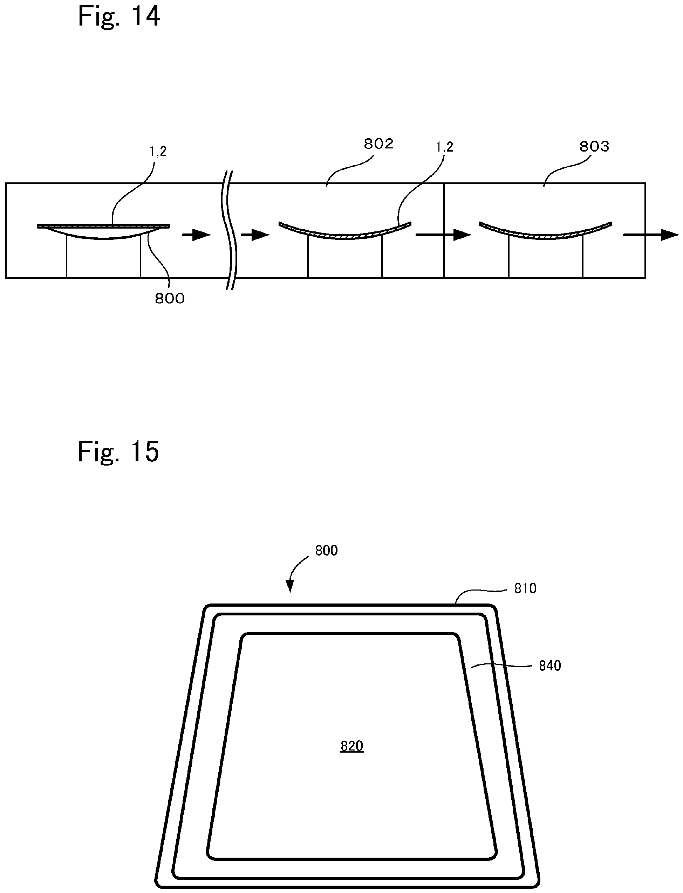

Here, a more detailed description will be giving of a molding tool, with reference to FIGS. 14 and 15. FIG. 14 is a side view of a furnace through which the molding tool passes, and FIG. 15 is a plan view of the molding tool. As shown in FIG. 15, a molding tool 800 includes a frame-shaped molding body 810, whose shape substantially coincides with the outer shape of the glass plates 1 and 2. Since the molding body 810 is formed into a frame shape, an internal space 820, which penetrates in the up-down direction, is formed therewithin. Peripheral portions of the glass plates 1 and 2, which have a flat plate shape, are placed on the upper face of the molding body 810. For this reason, heat is applied to the glass plates 1 and 2 from a heater (not shown in the diagram), which is arranged on the lower side, via the internal space 820. Thus, the glass plates 1 and 2 are softened by the applied heat, and are bent downward due to their own weight. In some cases, a shielding plate 840 for heat shielding is arranged on the inner peripheral edge of the molding body 810, so that the heat received by the glass plates 1 and 2 can be adjusted thereby. The heater can be provided not only below but also above the molding tool 800.

Then, the aforementioned obstructing layer 7 is laminated onto the outer glass plate 1 and the inner glass plate 2, which have a flat-plate shape, then the outer glass plate 1 and the inner glass plate 2 are laminated, and pass through a heating furnace 802 while being supported by the molding tool 800, as shown in FIG. 14. Upon being heated to a temperature close to the softening temperature within the heating furnace 802, the inner side of the glass plates 1 and 2 bend downward relative to the peripheral portion, due to their own weight, and are formed into a curved face. Subsequently, the glass plates 1 and 2 are brought into an annealing furnace 803 from the heating furnace 802, and an annealing process is performed. Thereafter, the glass plates 1 and 2 are brought out of the annealing furnace 803 and are cooled.

After the outer glass plate 11 and the inner glass plate 12 have thus been formed, subsequently, the intermediate film 3 is sandwiched between the outer glass plate 11 and the inner glass plate 12. Specifically, first, the outer glass plate 1, the first adhesion layer 32, the heat-generating layer 31, the second adhesion layer 33, and the inner glass plate 2 are laminated in this order. At this time, the face of the heat-generating layer 31 in which the first bus bar 312 and so on are formed is oriented toward the second adhesion layer 33 side. Upper and lower end portions of the heat-generating layer 31 are arranged inward of the cutout portions 21 and 22 of the inner glass plate 2. Furthermore, the cutout portions of the first and second adhesion layers 32 and 33 are matched with the cutout portions 21 and 22 of the inner glass plate 2. Thus, the outer glass plate 1 is exposed from the cutout portions 21 and 22 of the inner glass plate 2. Subsequently, the connecting members 41 and 42 are inserted between the heat-generating layer 31 and the second adhesion layer 33 from the cutout portions 21 and 22, respectively. At this time, solder with a low melting point, which serves as the fixing material 5, is applied to the connecting members 41 and 42, so that this solder is arranged on the bus bars 312 and 313.

A laminated body in which the glass plates 1 and 2, the intermediate film 3, and the connecting members 41 and 42 are thus laminated is put into a rubber bag, and is subjected to preliminary adhesion at about 70 to 110°C while being subjected to a reduced-pressure suction. Any other method can alternatively be used in preliminary adhesion, and the following method can also be employed. For example, the aforementioned laminated body is heated to 45 to 65°C by an oven. Next, this laminated body is pressed by a roll at 0.45 to 0.55 Mpa. Subsequently, this laminated body is heated again to 80 to 105°C by the oven, and is then pressed again at 0.45 to 0.55 Mpa by the roller. Preliminary adhesion is thus completed.

Next, main adhesion is performed. The laminated body after having undergone preliminary adhesion is subjected to main adhesion with 8 to 15 atm at 100 to 150°C, for example, by means of autoclave. Specifically, for example, main adhesion can be performed under the condition of 14 atm and 135°C. The adhesion layers 32 and 33 are adhered to the glass plates 1 and 2, respectively, with the heat-generating layer 31 therebetween, through the above-described preliminary adhesion and main adhesion. Furthermore, the solder on the connecting members 41 and 42 melts, and the connecting members 41 and 42 are fixed to the bus bars 312 and 313, respectively. The laminated glass according to this embodiment is thus manufactured. Note that a curved windshield can also be manufactured using other methods, such as press working.

3. Method of Using Windshield

The windshield that is configured as described above is attached to a vehicle body, and connection terminals are fixed to the connecting members 41 and 42. Thereafter, upon electric power being supplied to the connection terminals, a current is applied to the heating lines 6 via the connecting members 41 and 42 and the bus bars 312 and 313, and heat is generated. The windshield can be defogged with the generated heat.

4. Features

As described above, the following effects can be achieved according to the present embodiment.

(1) As described above, the amount of heat generated can be changed between regions arranged in the up-down direction and/or regions arranged in the left-right direction in the laminated glass by changing the width and/or the length of each heating line 6, and/or the space between the heating lines 6. Accordingly, the distribution of the amount of heat generated can be freely changed: for example, the amount of heat generated can be increased in the region in front of a driver where a high defogging effect is required, or the amount of heat generated in the center region in the up-down direction can be increased.

When the amount of heat generated is increased, if the density of the heating lines 6 is simply increased, these heating lines 6 are more likely to be visually recognized by occupants, such as a driver. However, if the amount of heat generated is increased by changing the width and/or the length of the heating lines 6 rather than the density thereof, the heating lines 6 become unlikely to be visually recognized and can be prevented from obstructing the driver's field of view. Particularly, if each heating line 6 is formed into a sine wave shape, light scattering can be optically suppressed, and the driver's field of view can be further prevented from being obstructed.

(2) Since the bus bars 312 and 313 and the heating lines 6 are made of the same material, the bus bars 312 and 313 and the heating lines 6 have the same coefficient of linear expansion. For this reason, there is the following advantage. If the bus bars 312 and 313 and the heating lines 6 are formed with different materials, the bus bars 312 and 313 and the heating lines 6 have different coefficients of linear expansion. Then, if, for example, these members are separately produced and fixed, problems may occur, e.g. the heating lines may come off of the bus bars, which may further cause the two glass plates that constitute the laminated glass to be raised relative to each other, due to a harsh change in the environment, such as that during a heat cycle test. However, such problems can be prevented by forming the bus bars 312 and 313 and the heating lines 6 with the same material as in this embodiment.

(3) Since the bus bars 312 and 313 and the heating lines 6 are formed integrally, a failure in the contact therebetween and a failure in heat generation can be prevented. A failure in heat generation will be described below in detail. Ordinarily, in the case of heating a glass plate for preventing fogging, current value control is required so that the upper limit value of the heating temperature is 70 to 80°C, for example, in order to prevent glass cracking. In this regard, if heat is locally generated due to the aforementioned contact resistance, current value control is needed with the temperature in the portion where heat is locally generated as the upper limit value of the heating temperature. As a result, the heating lines cannot be entirely controlled to sufficiently generate heat. However, the above-described configuration can prevent local heat generation, and it is therefore also possible to control the entire heating lines to sufficiently generate heat.

(4) The heat-generating layer 31 in which the bus bars 312 and 313 and the heat-generating layer 6 are arranged is sandwiched by the adhesion layers 32 and 33, and is arranged between the glass plates 1 and 2. As a result, the heat-generating layer 31 can be reliably fixed to the glass plates 1 and 2. Also, by covering the bus bars 312 and 313 and the heating lines 6 with the second adhesion layer 33, these members can be prevented from coming into contact with the glass plates. As a result, the glass plates can be prevented, in advance, from cracking.

(5) In the above embodiment, the bus bars 312 and 313 are connected to external terminals using two connecting members 41 and 42. However, for example, it is also conceivable that wide bus bars are prepared, unnecessary portions of these bus bars are cut off, and thereafter the bus bars are partially exposed from the cutout portions 21 and 22, thereby substituting the connecting members. However, it is also conceivable that this configuration will cause heat to be locally generated at corners of the cut bus bars. In this regard, in this embodiment, separate connecting members 41 and 42 are fixed to the respective bus bars 312 and 313, and it is therefore possible to prevent such local heat generation.

(6) In this embodiment, the bus bars 312 and 313 are arranged along the upper sides 11 and the lower sides 12, respectively, of the glass plates 1 and 2. This configuration makes it possible to cover the bus bars 312 and 313 with the obstructing layer 7, improving the appearance.

5. Modifications

Although one embodiment of the present invention has been described so far, the present invention is not limited to the above embodiment, and can be modified in various manners without departing from the gist thereof. Also, the following modifications can be combined as appropriate.

5.1

In the above embodiment, the bus bars 312 and 313 are formed so as to be covered by the obstructing layer 7, but this may not be the case, and the bus bars 312 and 313 do not need to be covered by the obstructing layer 7. Also, the obstructing layer 7 does not necessarily need to be provided.

5.2

In the above embodiment, the intermediate film 3 is constituted by a total of three layers, which are the heat-generating layer 31 and the pair of adhesion layers 32 and 33. However, this may not necessarily be the case. That is to say, the intermediate film 3 need only include at least the bus bars 312 and 313 and the heating line 6. Accordingly, for example, it is possible to include only one adhesion layer, or the heat-generating layer 31 can be sandwiched between the glass plates 1 and 2 using an adhesive or the like. Also, the base 311 may not be provided in the heat-generating layer 31.

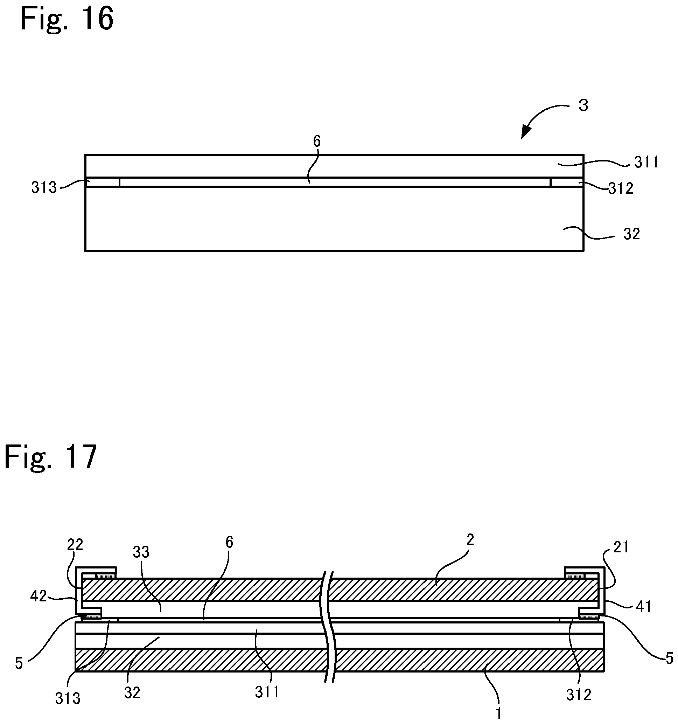

Specifically, the intermediate film 3 can be formed as follows. That is to say, as shown in FIG. 16, PVB with a thickness of several tens to several hundred $\mu$m is used as the base 311, and the bus bars 312 and 313 and the heating lines 6 are formed on this base 311 by means of etching. Next, PVB with a thickness of several hundred $\mu$m to several mm is laminated as the adhesion layer 32 on a face of the base 311 on the side where the heating lines 6 are arranged. The intermediate film 3 is thus formed. If the intermediate film 3 is thus made solely of PVB, the visibility can be improved since PET is not contained. This is because PET has high haze. In addition, PVB is softer than PET and therefore has high followability, and can be prevented from wrinkling.

5.3

The heat-generating layer 31 can be formed into any of a variety of shapes. For example, a sheet-shaped heat-generating layer 31 in which the bus bars 312 and 313 and the heating lines 6 are formed can be prepared on the base 311, in advance, and this heat-generating layer 31 can be cut off as appropriate into an appropriate shape and arranged between the glass plates 1 and 2. Accordingly, for example, if the end edges of the glass plates 1 and 2 are curved, end edges of the base 311 may also be curved in accordance therewith. The shape of the heat-generating layer 31 does not need to be completely matched with the shape of the glass plates 1 and 2. Since the heat-generating layer 31 can be arranged only in a portion where the defogging effect is to be achieved, the heat-generating layer 31 can be formed into any of various shapes, e.g. a shape with a size smaller than that of the glass plates 1 and 2. Note that the glass plates 1 and 2 can also be formed into any of various shapes other than a completely rectangular shape.

In the above embodiment, the bus bars 312 and 313 and the heating lines 6 are arranged on the base 311. However, at least the heating lines 6 need only be arranged on the base 311. Accordingly, for example, the bus bars 312 and 313 can also be arranged between the adhesion layers 32 and 33.

5.4

Adjacent heating lines 6 can also be connected using at least one bypass line. Thus, for example, even if one of the heating lines 6 is broken, electric power can be supplied from the adjacent heating line 6. The position and the number of bypass lines are not particularly limited. The shape of the bypass lines is not particularly limited either. The bypass lines can be arranged so as to extend obliquely, or can be formed into any of a variety of shapes, such as a wave shape. Note that the bypass lines may be formed with the same metallic material as that of the heating lines 6, and may be integrally formed with the heating lines 6.

5.5

The mode of the connecting members 41 and 42 and the configuration of the cutout portions 21 and 22 of the inner glass plate 2 are not particularly limited either. For example, as shown in FIG. 17, a configuration can also be employed in which small cutout portions 21 and 22 with substantially the same thickness as that of the connecting members 41 and 42 are formed in the inner glass plate 2, and the connecting members 41 and 42 that extend from the respective bus bars 312 and 313 are folded back at these cutout portions 21 and 22, and are stuck to a surface of the inner glass plate 2. This configuration can prevent the connecting members 41 and 42 from protruding in the face direction from the end portions of the laminated glass.

5.6

The shape of the glass plates 1 and 2 is not particularly limited, and need only be a shape with which the upper side 11, the lower side 12, a left side 13, and a right side 14 can be specified on the outer shape thereof. The shape of the glass plates 1 and 2 does not necessarily need to be a rectangular shape. The sides 11 to 14 need not be only straight lines, but may also be curved lines.

5.7

In the above embodiment, a heat-generating layer is provided in the intermediate film. Instead, the bus bars 312 and 313 and the heating lines 6 can be formed on the inner face of the outer glass plate 1 or the inner face of the inner glass plate 2 by means of screen printing or the like. In this case, the heat-generating layer 31 can be formed only with the base 311, or may be formed only with at least one adhesion layer. The bus bars 312 and 313 and the heating lines 6 can be arranged as in the above embodiment.

5.8

The above embodiment has described an example of applying the laminated glass according to the present invention to a windshield of an automobile. However, the invention is not limited thereto, and can also be applied to window glass of another vehicle such as a train, or of a building.

List of Reference Numerals

| 1 | Outer glass plate |
| 2 | Inner glass plate |
| 3 | Intermediate film |

31      Heat-generating layer
311     Base
312     First bus bar
313     Second bus bar
6       Heating line


**Claims**

1.  Laminated glass comprising:

    a first glass plate having a rectangular shape, and including a first side and a second side opposing the first side;
    a second glass plate arranged opposing the first glass plate, and having substantially the same shape as the shape of the first glass plate; and
    an intermediate film arranged between the first glass plate and the second glass plate,
    the intermediate film comprising:

    a first bus bar extending along an end portion closer to the first side;
    a second bus bar extending along an end portion closer to the second side; and
    a plurality of heating lines arranged parallel to each other so as to connect the first bus bar and the second bus bar to each other,
    wherein at least one of a length of the plurality of heating lines, a width of the plurality of heating lines, and a space between the plurality of heating lines is adjusted such that a plurality of regions with different amounts of heat generated are formed between the first bus bar and the second bus bar.

2.  The laminated glass according to claim 1,
    wherein the laminated glass constitutes a windshield for a vehicle, and
    an amount of heat generated in a region opposing a driver is greater than an amount of heat generated in another region.

3.  The laminated glass according to claim 1 or 2,
    wherein at least one of the heating lines is formed by combining a plurality of portions with different widths in a longitudinal direction.

4.  The laminated glass according to any one of claims 1 to 3,
    wherein at least one of the heating lines is provided with at least one curved line portion having a curved line.

5.  The laminated glass according to claim 4,
    wherein the curved line portion is provided with a wave-shaped curved line.

6.  The laminated glass according to claim 4,
    wherein the curved line portion is formed into a sine wave shape,
    at least a portion of at least a pair of adjacent ones of the heating lines is constituted by the curved line portion, and
    in the adjacent curved line portions, a distance between center lines of waves that constitute the curved line portions is twice an amplitude of the curved line portions or more.

7.  The laminated glass according to any one of claims 4 to 6,
    wherein at least one of the heating lines is provided with a plurality of the curved line portions, and the curved line portions have different lengths.

8.  The laminated glass according to any one of claims 1 to 7,
    wherein at least some of the plurality of heating lines are formed such that a space therebetween differs.

9.  The laminated glass according to any one of claims 1 to 8,
    wherein at least some of the plurality of heating lines are formed so as to have different widths.

10. The laminated glass according to any one of claims 1 to 9,
    wherein at least some of the plurality of heating lines are formed so as to have different lengths.

## Fig. 1

## Fig. 2

## Fig. 3

## Fig. 4

REGION WITH LARGE
AMOUNT OF HEAT
GENERATED

## Fig. 5

312

300mm

300mm

300mm

400 W/m2

600 W/m2

400 W/m2

900mm

6

313

1500mm

## Fig. 6

61

62

63

## Fig. 7

61

62

63

Fig. 8

| | |
|---|---|
| 0 -2 | STRAIGHT LINE |
| 0 5 -2 | CURVED LINE PATTERN 1 |
| 0 5 | CURVED LINE PATTERN 2 |
| 0 5 | CURVED LINE PATTERN 3 |

Fig. 9

312

300mm — 400 W/m2

300mm — 600 W/m2 — 900mm

300mm — 400 W/m2

6

313

1500mm

Fig. 10

Fig. 11

312

6

FIRST REGION WITH SMALL AMOUNT OF HEAT GENERATED

313

SECOND REGION WITH SMALL AMOUNT OF HEAT GENERATED

THIRD REGION WITH LARGE AMOUNT OF HEAT GENERATED

# Fig. 12

TEST REGION A

TEST REGION B

Fig. 13

Fig. 14

Fig. 15

Fig. 16

Fig. 17

## INTERNATIONAL SEARCH REPORT

| International application No. |
| --- |
| PCT/JP2018/001615 |

A. CLASSIFICATION OF SUBJECT MATTER
Int.Cl.    C03C27/12(2006.01)i,    B60S1/02(2006.01)i,    H05B3/10(2006.01)i,
           H05B3/20(2006.01)i, H05B3/86(2006.01)i

According to International Patent Classification (IPC) or to both national classification and IPC

B. FIELDS SEARCHED

Minimum documentation searched (classification system followed by classification symbols)
Int.Cl.    C03C27/12, B60S1/02, H05B3/10, H05B3/20, H05B3/86

| Documentation searched other than minimum documentation to the extent that such documents are included in the fields searched | |
| --- | --- |
| Published examined utility model applications of Japan | 1922-1996 |
| Published unexamined utility model applications of Japan | 1971-2018 |
| Registered utility model specifications of Japan | 1996-2018 |
| Published registered utility model applications of Japan | 1994-2018 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| X<br>Y | JP 2011-515809 A (LG CHEM, LTD.) 19 May 2011, claims 1-20, paragraphs [0026]-[0029], fig. 1-14, examples & US 2011/0017719 A1, cls. 1-20, paragraphs [0030]-[0033], fig. 1-14, examples & US 2011/0042370 A1 & WO 2009/116786 A2 & EP 2275389 A2 & KR 10-2009-0099502 A & KR 10-2009-0099503 A & CN 101977863 A | 1-6, 8-9<br>7, 10 |
| Y | JP 8-72674 A (ASAHI GLASS CO., LTD.) 19 March 1996, fig. 1, 3 & US 5798499 A, fig. 1, 3 | 7, 10 |

☒   Further documents are listed in the continuation of Box C.    ☐   See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 22 March 2018 (22.03.2018) | 03 April 2018 (03.04.2018) |

| Name and mailing address of the ISA/<br>Japan Patent Office<br>3-4-3, Kasumigaseki, Chiyoda-ku,<br>Tokyo 100-8915, Japan | Authorized officer<br><br>Telephone No. |
| --- | --- |

Form PCT/ISA/210 (second sheet) (January 2015)

**INTERNATIONAL SEARCH REPORT**

| International application No. |
| --- |
| PCT/JP2018/001615 |

C (Continuation).    DOCUMENTS CONSIDERED TO BE RELEVANT

| Category* | Citation of document, with indication, where appropriate, of the relevant passages | Relevant to claim No. |
| --- | --- | --- |
| X | JP 2012-14945 A (FUJIFILM CORP.) 19 January 2012, claims 1-26, paragraphs [0012]-[0016], [0019], fig. 1-10 (Family: none) | 1-10 |
| X | JP 11-20622 A (ASAHI GLASS CO., LTD.) 26 January 1999, claim 1, paragraphs [0008]-[0012], fig. 1-2 (Family: none) | 1-3, 9-10 |
| X | JP 2016-78835 A (DENSO CORP.) 16 May 2016, claims 1-16, paragraph [0039], fig. 1-13 & WO 2016/059780 A1 | 1, 8 |
| A | US 2013/0175255 A1 (LG CHEM, LTD.) 11 July 2013, fig. 1-3 & WO 2012/036459 A2 & EP 2618632 A2 & KR 10-2012-0028279 A & CN 103098541 A | 1-10 |
| P, X | JP 2017-204388 A (DAINIPPON PRINTING CO., LTD.) 16 November 2017, claims 1-11, paragraphs [0004], [0063], fig. 1-9 (Family: none) | 1-5, 7-10 |
| P, X | JP 2017-212031 A (DAINIPPON PRINTING CO., LTD.) 30 November 2017, claims 1-5, paragraphs [0025], [0028]-[0029], fig. 1-6 (Family: none) | 1-5, 7-10 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000077173 A